# EUROPÄISCHE PATENTSCHRIFT

(11) **EP 1 475 254 B1**
(45) Veröffentlichungstag und Bekanntmachung des Hinweises auf die Patenterteilung: **05.09.2007**
(21) Anmeldenummer: 04006117.8
(22) Anmeldetag: 15.03.2004
(51) Int. Cl.: B60G 9/00, B60G 11/27

(54) **Achseinbindung für Achsen von Fahrzeugen**
Axle fixation for a vehicle axle
Fixation d'essieu pour un essieu de véhicule

(30) Priorität: 05.05.2003 DE 10320218
(43) Veröffentlichungstag der Anmeldung: 10.11.2004
(73) Patentinhaber: MAN Nutzfahrzeuge Aktiengesellschaft, 80976 München (DE)
(72) Erfinder: Rowold, Torsten, Dipl.-Ing., 80999 München (DE); Reiter, Thomas, Dipl.-Ing, 84174 Eching (DE); Sirch, Robert, Dipl.-Ing., 82223 Eichenau (DE)

(56) Entgegenhaltungen:
- EP-A- 0 618 095
- DE-A1- 10 054 839
- DE-C1- 4 232 779
- US-A- 1 872 196
- US-A- 3 437 333
- US-A- 3 773 347
- US-A- 4 858 949

## Beschreibung

Die Erfindung betrifft eine Achsanbindung für Achsen von Fahrzeugen gemäß dem Oberbegriff der beiden Ansprüche 1 und 2.

Eine gattungsgemäße Achsanbindung für Achsen von Nutzfahrzeugen ist aus der DE 100 54 839 A1 bekannt. Weitere relevante Achsanbindungen sind aus US 4858949 A, DE 4232779 C und US 1872196 A bekannt.

Es ist Aufgabe der Erfindung, eine gattungsgemäße Achsanbindung für Achsen von Nutzfahrzeugen technisch und wirtschaftlich zu optimieren.

Diese Aufgabe wird erfindungsgemäß durch die Merkmale der beiden Ansprüche 1 und 2 gelöst.

So ist gemäß Anspruch 1 eine Achsanbindung für blatt- oder luftgefederte Achsen von Fahrzeugen mit einem zumindest abschnittsweise als Vierkantrohr ausgebildeten Achskörper gegeben, welcher im Bereich seines Vierkantrohrabschnittes an seiner Ober- oder Unterseite von hieran mittelbar oder unmittelbar anliegenden Längslenkern oder Blattfederorganen gekreuzt und mit diesen mittels zusätzlicher Befestigungsmittel und gegebenenfalls weiterer Halteelemente lösbar verbunden ist. An den Luftfederbälge tragenden Längslenkern ist jeweils eine quer zur Fahrtrichtung verlaufende, etwa U-förmig gestaltete Ausnehmung vorgesehen, an deren gebildeter, horizontal verlaufender Grundfläche jeweils eine Ober- oder Unterseite des Vierkantrohrabschnittes des Achskörpers und an deren beiden vertikal verlaufenden vorderen und hinteren Stirnseiten jeweils eine, an der Vorder- und Hinterseite des Vierkantrohrabschnittes des Achskörpers gebildete, quer zur Fahrtrichtung verlaufende vorder- und hinterseitige Anlagefläche kraft- und formschlüssig zur abstützenden Anlage kommt.

Dabei weist wenigstens eine der vorder- oder hinterseitigen Anlageflächen des Vierkantrohrabschnittes des Achskörpers eine solcherart bearbeitete Oberfläche auf, dass die zwischen den vorderen und hinteren Anlageflächen gebildete Außenkontur des Vierkantrohrabschnittes formschlüssig mit dem definierten Öffnungsabstand der etwa U-förmigen Ausnehmung des jeweiligen Längslenkers korrespondiert.

Gemäß Anspruch 2 ist eine Achsanbindung für blatt- oder luftgefederte Achsen von Fahrzeugen mit einem zumindest abschnittsweise als Vierkantrohr ausgebildeten Achskörper gegeben, welcher im Bereich seines Vierkantrohrabschnittes an seiner Ober- oder Unterseite von hieran mittelbar oder unmittelbar anliegenden Längslenkern oder Blattfederorganen gekreuzt und mit diesen mittels zusätzlicher Befestigungsmittel und gegebenenfalls weiterer Halteelemente lösbar verbunden ist. Dabei sind die Blattfederorgane im wesentlichen über Halteelemente lösbar mit dem Vierkantrohr des Achskörpers verbunden, wobei zumindest die den Blattfederorganen nächstgeordneten Halteelemente eine quer zur Fahrtrichtung verlaufende, etwa U-förmig gestaltete Ausnehmung aufweisen, an deren gebildeter, horizontal verlaufender Grundfläche jeweils eine Ober- oder Unterseite des Vierkantrohrabschnittes des Achskörpers und an deren beiden vertikal verlaufenden vorderen und hinteren Stirnseiten jeweils eine an der Vorder- und Hinterseite des Vierkantrohrabschnittes des Achskörpers gebildete, quer zur Fahrtrichtung verlaufende vorder- und hinterseitige Anlagefläche kraft- und formschlüssig zur abstützenden Anlage kommt.

Dabei weist wenigstens eine der vorder- oder hinterseitigen Anlageflächen des Vierkantrohrabschnittes des Achskörpers eine solcherart bearbeitete Oberfläche auf, dass die zwischen den vorderen und hinteren Anlageflächen gebildete Außenkontur des Vierkantrohrabschnittes formschlüssig mit dem definieren Öffnungsabstand der wenigstens einen, etwa U-förmigen Ausnehmung des jeweiligen Halteelementes korrespondiert.

Gemäß Anspruch 1 und 2 ist - infolge der kraft- und formschlüssigen Aufnahme der Achsbrücke zumindest innerhalb der etwa U-förmig gestalteten Ausnehmung des Längslenkers beziehungsweise des wenigstens einen Halteelementes - eine optimierte Krafteinleitung der über den Längslenker beziehungsweise über die Blattfederorgane und ihre Halteelemente in die Achsbrücke eingeleiteten Längskräfte vorzugsweise in die Wandung der Ober- und/oder Unterseiten des Vierkantrohrabschnittes des Achskörpers ermöglicht. Durch die kraftflussoptimierte und durch geringe Flächenpressung gekennzeichnete Aufnahme der Achsbrücke in den etwa U-förmigen Ausnehmungen des Längslenkers beziehungsweise der Halteelemente ist in vorteilhafter Weise die Lebensdauer der Achsbrücke erheblich erhöht und zusätzlich die Position der die Luftfederbälge tragenden Längslenker beziehungsweise der die Blattfederorgane tragenden Halteelemente genau definiert. Durch die Einleitung der Längskräfte in den ober- und/oder unterseitigen Teil der Wandung des Achskörpers kann in vorteilhafter Weise eine mögliche Verformung der Achsbrücke unter Last, beispielsweise bei Vorsehen einer geschweißten Achsbrücke auf ein unkritisches Maß reduziert werden. Ein ansonsten bei herkömmlichen Achsanbindungen übliche Einleitung der Längskräfte in den Achskörper über die Schweißnähte ist bei der erfindungsgemäßen Lösung wirksam vermieden.

Gemäß einer weiteren Ausgestaltung der Erfindung kann wenigstens eine der vorderoder hinterseitigen Anlageflächen des Vierkantrohrabschnittes des Achskörpers gegenüber dessen Außenkontur zumindest teilweise erhaben ausgebildet sein.

Gemäß einer weiteren Ausgestaltung der Erfindung können die vorder- und hinterseitigen Anlageflächen des Vierkantrohrabschnittes des Achskörpers vorwiegend jeweils im Bereich ihrer mit minimalen Radien oder scharfen Kanten ausgestalteten Ecken an den vorderen und hinteren, vertikalen Stirnseiten des Längslenkers beziehungsweise der Halteelemente zur form- und kraftschlüssigen Anlage kommen.

Gemäß einer weiteren Ausgestaltung der Erfindung kann die wenigstens eine, zumindest teilweise erhaben ausgeführte Anlagefläche des Achskörpers entweder einteilig mit diesem gebildet oder auf diesem als separater Blechstreifen schweißtechnisch angeheftet oder sonstwie gefügt sein. Die wenigstens eine Anlagefläche kann nach einem spanabnehmenden Verfahren oder nach einem Kalibrierverfahren solcherart bearbeitet und auf definiertes Maß gebracht sein, dass die zwischen den vorderen und hinteren Anlageflächen gebildete Außenkontur des Vierkantrohrabschnittes formschlüssig mit dem definierten Öffnungsabstand der etwa U-förmigen Ausnehmung des jeweiligen Längslenkers oder der betreffenden Ausnehmung des jeweiligen Halteelementes korrespondiert.

Gemäß einer weiteren Ausgestaltung der Erfindung können die Längslenker mittels hierfür geeigneter Befestigungsmittel, wie beispielsweise Verschraubungselemente oder dergleichen, mittelbar oder unmittelbar mit den Vierkantrohrabschnitten des Achskörpers verbunden sein.

Gemäß einer weiteren Ausgestaltung der Erfindung können die Längslenker Vertikalbohrungen zur Aufnahme der Befestigungsmittel aufweisen, welche mit in einer ober- oder unterseitig des Achskörpers angeordneten Halteplatte gegeben vertikalen Bohrungen korrespondieren.

Gemäß einer weiteren Ausgestaltung der Erfindung können die Blattfederorgane mittels hierfür geeigneter Befestigungsmittel wie beispielsweise Federbügel oder dergleichen im Zusammenwirken mit weiteren Halteelementen mittelbar mit den Vierkantrohrabschnitten des Achskörpers verbunden sein.

Gemäß einer weiteren Ausgestaltung der Erfindung können als weitere Halteelemente zumindest eine dem Blattfederorgan unter- oder oberseitig aufliegende Federspannplatte und ein dem Blattfederorgan ober- oder unterseitig unterlegtes Halteelement vorgesehen sein, das den Vierkantrohrabschnitt des Achskörpers bereichsweise mit einer etwa U-förmigen Ausnehmung kraft- und formschlüssig umschließt.

Gemäß einer weiteren Ausgestaltung der Erfindung kann das Halteelement mit weiteren auf der gegenüberliegenden Seite des Vierkantrohrabschnittes angeordneten Halteelementen den Vierkantrohrabschnitt des Achskörpers im Zusammenwirken mit Federbügeln als weitere Halteelemente einspannen.

Gemäß einer weiteren Ausgestaltung der Erfindung können die Halteelemente entweder als separate Bauteile oder als ein einteiliges gebildetes Bauteil ausgebildet sein.

Gemäß einer weiteren Ausgestaltung der Erfindung können die im Bereich des Vierkantrohrabschnittes gegebene Halteplatte oder die gegebenen Halteelemente Bestandteil des Achskörpers sein.

Gemäß einer weiteren Ausgestaltung der Erfindung können die Halteplatte oder die Halteelemente ober- oder unterseitig des Vierkantrohrabschnittes als separat ausgebildetes Bauteil angeordnet sein.

Gemäß einer weiteren Ausgestaltung der Erfindung können die als separates Bauteil vorgesehene Halteplatte oder die Halteelemente den Vierkantrohrabschnitt mit einer hierzu komplementär ausgebildeten und quer zur Fahrtrichtung verlaufenden U-förmigen Ausnehmung form- und kraftschlüssig umgreifen.

Gemäß einer weiteren Ausgestaltung der Erfindung kann die U-förmige Ausnehmung der Halteplatte oder der Halteelemente eine horizontal verlaufende Grundfläche aufweisen, an welcher jeweils eine Ober- oder Unterseite des Vierkantrohrabschnittes des Achskörpers zur Anlage kommt.

Gemäß einer weiteren Ausgestaltung der Erfindung kann an den beiden vertikal verlaufenden vorderen und hinteren Stirnseiten der U-förmigen Ausnehmung der Halteplatte oder der Halteelemente jeweils eine an der Vorder- und Hinterseite des Vierkantrohrabschnittes des Achskörpers gebildete, quer zur Fahrtrichtung verlaufende vorder- und hinterseitige Anlagefläche kraft- und formschlüssig zur abstützenden Anlage kommen.

Gemäß einer weiteren Ausgestaltung der Erfindung kann wenigstens eine der vorderoder hinterseitigen Anlageflächen des Vierkantrohrabschnittes des Achskörpers gegebenenfalls teilweise erhaben ausgebildet und eine solcherart bearbeitete Oberfläche aufweisen, dass die zwischen den vorderen und hinteren Anlageflächen gebildete Außenkontur des Vierkantrohrabschnittes formschlüssig mit dem definierten Öffnungsabstand der etwa U-förmigen Ausnehmung der Halteplatte oder der Halteelemente korrespondiert.

Gemäß einer weiteren Ausgestaltung der Erfindung können die vorder- und hinterseitigen Anlageflächen des Vierkantrohrabschnittes des Achskörpers vorwiegend jeweils im Bereich ihrer mit minimalen Radien oder scharfen Kanten ausgestalteten Ecken an den vorderen und hinteren, vertikalen Stirnseiten der Halteplatte oder der Halteelemente zur form- und kraftschlüssigen Anlage kommen.

Gemäß einer weiteren Ausgestaltung der Erfindung können die Längslenker oder die Halteelemente zusätzlich zur quer verlaufenden U-förmigen Ausnehmung eine diese kreuzende, etwa in Fahrtrichtung verlaufende U-förmige Längsausnehmung aufweisen, deren vertikale Stirnseiten mit auf den erhabenen Anlageflächen des Vierkantrohrabschnittes des Achskörpers gegebenen vertikalen Stufenabsätzen quer zur Fahrtrichtung zur seitenabstützenden Anlage kommen.

Gemäß einer weiteren Ausgestaltung der Erfindung können stirnseitig der quer zur Fahrtrichtung verlaufenden U-förmigen Ausnehmung der Längslenker oder der Halteelemente vertikale, längs zur Fahrtrichtung verlaufende Anlageflächen gegeben sein, die sich an innerhalb der erhabenen Anlageflächen des Vierkantrohrabschnittes des Achskörpers eingerückt gegebenen vertikalen Stufenabsätzen quer zur Fahrtrichtung abstützen.

Gemäß einer weiteren Ausgestaltung der Erfindung kann die einteilig mit dem Achskörper gebildete oder die als separates Bauteil vorgesehene Halteplatte wenigstens einen in Fahrtrichtung verlaufenden U-förmigen Längsausnehmungsabschnitt aufweisen, dessen vertikale Stirnseiten mit auf den erhabenen Anlageflächen des Vierkantrohrabschnittes des Achskörpers gegebenen vertikalen Stufenabsätzen quer zur Fahrtrichtung zur seitenabstützenden Anlage kommen.

Gemäß einer weiteren Ausgestaltung der Erfindung kann als Fahrzeug ein Nutzfahrzeug, ein Sattelzug oder ein Anhänger vorgesehen sein.

Nachstehend ist die erfindungsgemäße Lösung anhand in der Zeichnung dargestellter Ausführungsbeispiele noch näher erläutert.

In der Zeichnung zeigen:
- Fig. 1: ausschnittsweise und in perspektivischer Darstellung von vorne gesehen eine erste Ausführungsart einer Achsanbindung für luftgefederte Fahrzeugachsen,
- Fig. 2: ausschnittsweise und in perspektivischer Darstellung von vorne gesehen eine zweite Ausführungsart einer Achsanbindung für luftgefederte Fahrzeugachsen,
- Fig. 3: ausschnittsweise einen Achskörper gemäß Fig. 1 in einer Schnittdarstellung in Fahrzeuglängsrichtung,
- Fig. 4: in Vorderansicht einen Achskörper einer luftgefederten Fahrzeugachse gemäß Fig. 1 und Fig. 2,
- Fig. 5: schematisch und in Seitenansicht eine an einem Fahrzeugrahmen angeordnete luftgefederte Fahrzeugachse gemäß dem Stand der Technik,
- Fig. 6: ausschnittsweise und in perspektivischer Darstellung eine dritte Ausführungsart einer Achsanbindung einer mittels eines Blattfederorgans gefederten Fahrzeugachse und
- Fig. 7: ausschnittsweise einen Achskörper gemäß Fig. 6 in einer Schnittdarstellung in Fahrzeuglängsrichtung.

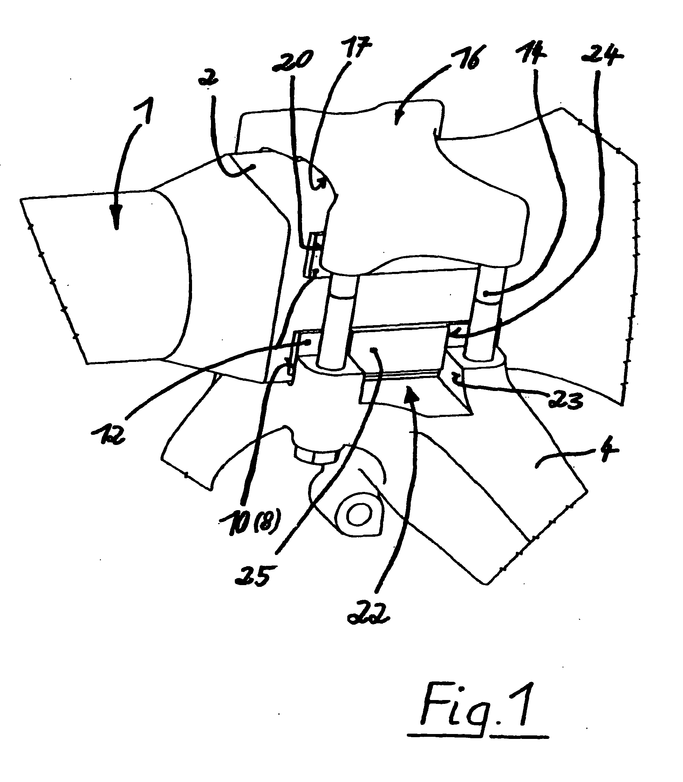

In Fig. 1 ist ausschnittsweise, in perspektivischer Darstellung und von vorne gesehen eine erste Ausführungsart einer Achsanbindung für Achsen von Fahrzeugen gezeigt. Die hier nur ausschnittsweise gezeigte Achse ist hier beispielsweise luftgefedert ausgeführt und einem Lastkraftwagen zugehörig. Die Achse besteht in dieser Ausführungsform aus einem Achskörper 1, der zumindest bereichsweise einen Vierkantrohrabschnitt 2 aufweist.

Der Achskörper 1 ist im Bereich seines Vierkantrohrabschnittes 2 an seiner Ober- und Unterseite von hieran anliegenden, Luftfederbälge 3 tragende Längslenkern 4 gekreuzt und mit diesen mittels Befestigungsmitteln 14 lösbar verbunden. Aus Gründen der Vereinfachung ist hier nur einer der beiden Längslenker 4 und der mit diesen verbundene Abschnitt des Achskörpers 1 gezeigt.

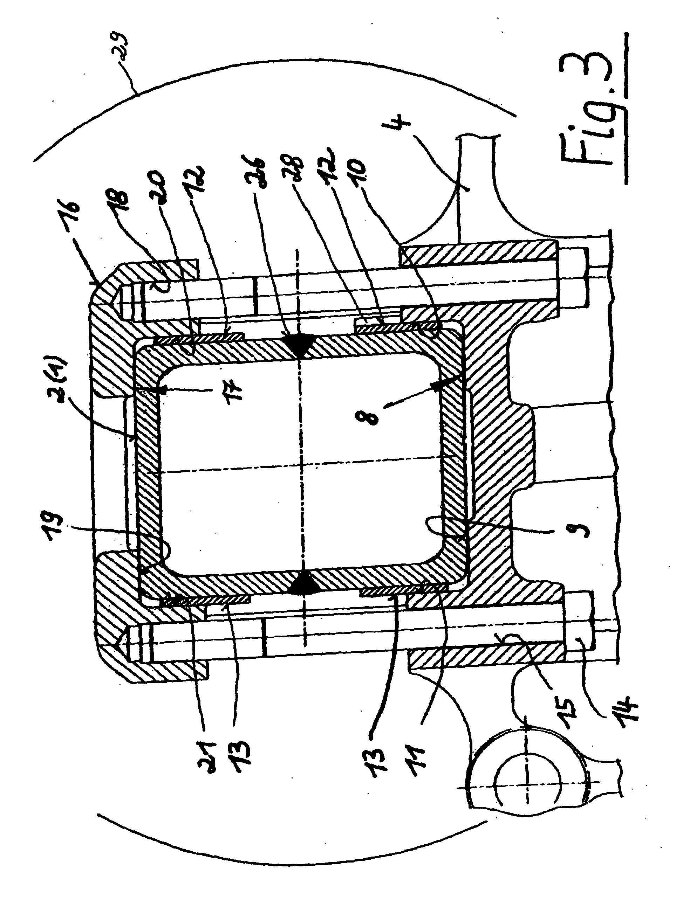

Der Längslenker 4 weist in diesem Ausführungsbeispiel eine quer zur Fahrtrichtung verlaufende, etwa U-förmig gestaltete Ausnehmung 8 (Fig. 3) auf, an deren gebildeter, horizontal verlaufender Grundfläche 9 eine Unterseite des Vierkantrohrabschnittes 2 des Achskörpers 1 und an deren beiden vertikal verlaufenden vorderen und hinteren Stirnseiten 10,11 jeweils eine an der Vorder- und Hinterseite des Vierkantrohrabschnittes 2 des Achskörpers 1 gebildete, quer zur Fahrtrichtung verlaufende vorder- und hinterseitige Anlagefläche 12,13 kraft- und formschlüssig zur abstützenden Anlage kommt. Die vorderund hinterseitigen Anlageflächen 12,13 sind hier gegenüber der übrigen Außenkontur des Vierkantrohrabschnittes 2 des Achskörpers 1 erhaben ausgebildet. Die Anlageflächen 12,13 weisen eine solcherart bearbeitete Oberfläche auf, dass die zwischen den vorderen und hinteren Anlageflächen 12,13 gebildete, abragende Außenkontur des Vierkantrohrabschnittes 2 formschlüssig mit dem definierten Öffnungsabschnitt der etwa U-förmigen Ausnehmung 8 des Längslenkers 4 korrespondiert.

Nach einer anderen, hier nicht gezeigten Ausführungsvariante kann es eine Oberseite des Vierkantrohrabschnittes 2 des Achskörpers 1 sein, die von einer etwa U-förmig gestalteten Ausnehmung 8 des Längslenkers 4 unter Kraft- und Formschluß oberseitig umgriffen ist.

In der hier gezeigten Ausführungsvariante weisen die Längslenker 4 Vertikalbohrungen 15 zur Aufnahme der Befestigungsmittel 14 auf, welche mit in einer oberseitig des Achskörpers 1 angeordneten Halteplatte 16 gegebenen vertikalen Bohrungen 18 korrespondieren. Diese Bohrungen 18 sind hier als Gewindebohrungen ausgeführt und nehmen die hier beispielsweise als Schrauben ausgeführten Befestigungsmittel 14 auf.

Die im Bereich des Vierkantrohrabschnittes 2 gegebene Halteplatte 16 ist hier oberseitig des Vierkantrohrabschnittes 2 als separates Bauteil angeordnet und mittels der Befestigungsmittel 14 befestigt. Alternativ hierzu kann die im Bereich des Vierkantrohrabschnittes 2 gegebene Halteplatte 16 unterseitig des Vierkantrohrabschnittes 2 gegeben sein und diesen form- und kraftschlüssig umschließen.

Nach einer anderen, hier nicht gezeichneten Variante kann anstelle einer separaten Halteplatte am Achskörper 1 eine einteilig mit diesem Achskörper 1 gebildete Halteplatte vorgesehen sein, die als angeschmiedete, angegossene, angeschweißte oder sonstwie befestigte Befestigungsabschnitte ausgebildet ist. Die Befestigungsabschnitte dienen zur Befestigung der Befestigungsmittel 14, wie beispielsweise Federbügel, Verschraubungselemente und dergleichen. Die gegebenenfalls am Achskörper 1 vorgesehenen Befestigungsabschnitte können die für die Aufnahme der Befestigungsmittel 14 erforderlichen Bohrungen oder Aussparungen aufweisen.

Die hier in Fig. 1 als separates Bauteil vorgesehene Halteplatte 16 umgreift den Vierkantrohrabschnitt 2 mit einer hierzu komplementär ausgebildeten und quer zur Fahrtrichtung verlaufenden U-förmigen Ausnehmung 17 form- und kraftschlüssig. Die U-förmige Ausnehmung 17 (Fig. 1,3) der Halteplatte 16 weist eine horizontal verlaufende Grundfläche 19 auf, an welcher eine Oberseite des Vierkantrohrabschnittes 2 des Achskörpers 1 zur Anlage kommt. An den beiden vertikal verlaufenden vorderen und hinteren Stirnseiten 20,21 der U-förmigen Ausnehmung 17 der Halteplatte 16 kommen jeweils eine an der Vorder- und Hinterseite des Vierkantrohrabschnittes 2 des Achskörpers 1 gebildete, quer zur Fahrtrichtung verlaufende vorder- und hinterseitige Anlagefläche 12,13 kraft- und formschlüssig zur abstützenden Anlage.

Bei der in Fig. 1 und Fig. 3 gezeigten Ausführungsvariante sind die vorder- und hinterseitigen Anlageflächen 12,13 des Vierkantrohrabschnittes 2 des Achskörpers 1 erhaben ausgebildet und weisen eine solcherart bearbeitete Oberfläche auf, dass die zwischen den vorderen und hinteren Anlageflächen 12,13 gebildete Außenkontur des Vierkantrohrabschnittes 2 formschlüssig mit dem definierten Öffnungsabstand der etwa U-förmigen Ausnehmung 17 der Halteplatte 16 korrespondiert. Die vorder- und hinterseitige Anlageflächen 12,13 des Vierkantrohrabschnittes 2 des Achskörpers 1 kommen vorwiegend im Bereich ihrer mit minimalen Radien ausgestalteten Ecken an den vorderen und hinteren, vertikalen Stirnseiten 20,21 der Halteplatte 16 zur form- und kraftschlüssigen Anlage.

Die in Fig. 1 und 3 gezeigten Längslenker 4 weisen zusätzlich zu der quer zur Fahrzeuglängsrichtung verlaufenden U-förmigen Ausnehmung 8 eine diese kreuzende, etwa in Fahrtrichtung verlaufende U-förmige Längsausnehmung 22 auf. Deren vertikale Stirnseiten 23 kommen mit einem auf den erhabenen Anlageflächen 12,13 des Vierkantrohrabschnitte 2 des Achskörpers 1 gegebenen vertikalen Stufenabsatz 24 quer zur Fahrtrichtung zur seitenabstützenden Anlage.

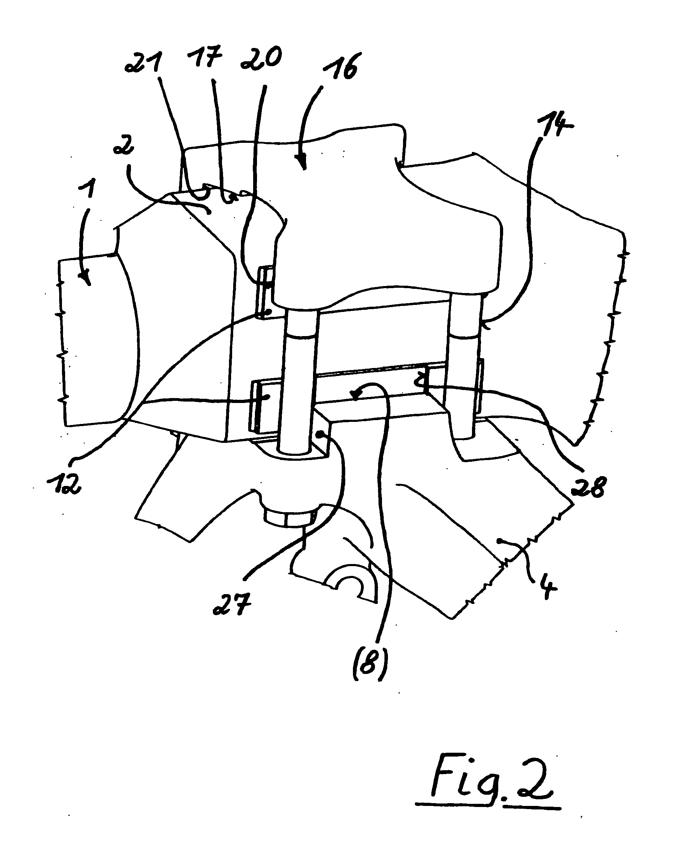

In Fig. 2 ist ausschnittsweise und in perspektivischer Darstellung von vorne gesehen eine zweite Ausführungsart einer Achsanbindung für Achsen von Nutzfahrzeugen gezeigt. Der Achskörper 1 ist in diesem Ausführungsbeispiel ebenfalls über einen hier nicht gezeigten, auf dem Längslenker 4 angeordneten Luftfederbalg abgefedert. Bei der Achsanbindung sind stirnseitig der quer zur Fahrtrichtung verlaufenden U-förmigen Ausnehmung 8 der Längslenker 4 an diesen vertikale und längs zur Fahrtrichtung verlaufende Anlageflächen 24 gegeben, die sich an innerhalb der erhabenen Anlageflächen 12,13 eingerückt gegebenen vertikalen Stufenabsätzen 28 quer zur Fahrtrichtung abstützen. Im Bereich stirnseitig der längs zur Fahrtrichtung verlaufenden vertikalen Anlageflächen 27 sind innerhalb des Längslenkers 4 die in Fig. 3 näher bezeichneten, zur Aufnahme der Befestigungsmittel 14 vorgesehenen Vertikalbohrungen 15 angeordnet. Die Befestigungsmittel 14 sind hier als Schraubverbindungen ausgeführt.

In Fig. 3 ist ausschnittsweise der Achskörper 1 gemäß Fig. 1 in einer Schnittebene parallel zur Fahrzeuglängsachse gezeigt. Ein hier nur schemenhaft angedeutetes Fahrzeugrad ist mit 29 bezeichnet. Der Vierkantrohrabschnitt 2 des in diesem Ausführungsbeipsiel geschweißt ausgeführten, aus zwei Körperhälften bestehenden und mit einer Schweißnaht 26 zusammengehaltenen Achskörpers 1 weist vorderseitige obere und untere Anlageflächen 12 und hinterseitige obere und untere Anlageflächen 13 auf.

Die vorder- und hinterseitigen Anlageflächen 12,13 sind erhaben ausgebildet und werden in diesem Ausführungsbeispiel aus Blechstreifen gebildet, die mittels hier nicht gezeigter Heftschweißungen auf den Vierkantrohrabschnitten 2 des Achskörpers 1 fixiert sind.

In Alternative hierzu können die zumindest teilweise erhaben ausgeführten Anlageflächen 12,13 des Achskörpers 1 entweder einteilig mit diesem gebildet oder auf diesem als separate Blechstreifen aufgeklebt, gelötet oder sonstwie gefügt sein. Die Anlageflächen 12,13 können nach einem spanabnehmenden Verfahren oder nach einem Kalibrierverfahren solcherart bearbeitet und auf definiertes Maß gebracht sein, dass die zwischen den vorderen und hinteren Anlageflächen 12,13 gebildete Außenkontur des Vierkantrohrabschnittes 2 formschlüssig mit dem definierten Öffnungsabstand der etwa U-förmigen Ausnehmung 8 des jeweiligen Längslenkers 4 korrespondiert.

Die vorder- und hinterseitigen Anlageflächen 12,13 des Vierkantrohrabschnittes 2 des Achskörpers kommen vorwiegend jeweils im Bereich ihrer mit minimalen Radien ausgestalteten Ecken an den vorderen und hinteren, vertikalen Stirnseiten 10,11 des Längslenkers 1 zur form- und kraftschlüssigen Anlage.

Die Längslenker 4 sind mittels hierfür geeigneter, hier als Verschraubungselemente ausgeführter Befestigungsmittel 14 mittels einer zusätzlich oberhalb des Achskörpers 1 angeordneten und diesen kraft- und formschlüssig umfassenden Halteplatte 16 mit den Vierkantrohrabschnitten 2 des Achskörpers 1 verbunden. Die Halteplatte 16 weist zur Aufnahme der Befestigungsmittel 14 Vertikalbohrungen 18 auf, die hier als Gewindebohrungen ausgeführt sind.

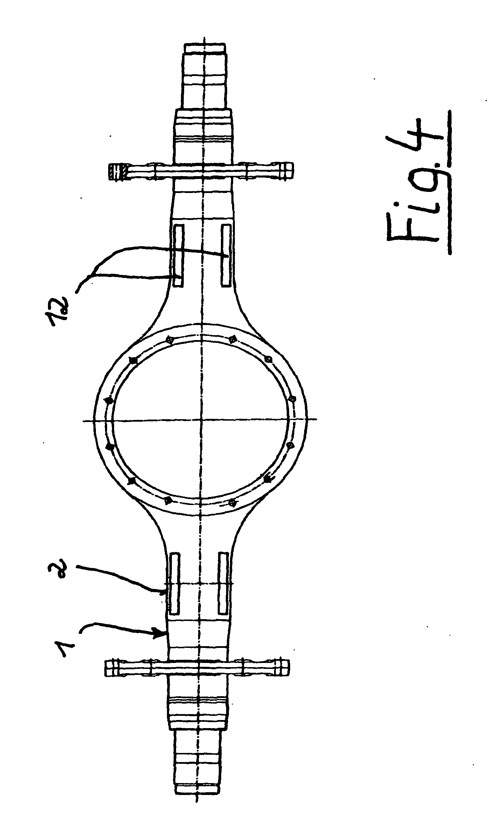

In Fig. 4 ist Vorderansicht ein Achskörper 1 einer luftgefederten oder blattgefederten Achse eines Fahrzeuges gezeigt. Als Fahrzeug kann ein Nutzfahrzeug, wie beispielsweise ein Lastkraftwagen oder Omnibus, ein Sattelzug oder ein Anhänger gegeben sein.

Der Achskörper 1 weist einen Vierkantrohrabschnitt 2 auf, an dem vorder- und hinterseitig erhabene Anlageflächen 12,13 zur kraft- und formschlüssigen Aufnahme der U-förmigen Ausnehmung 8 beispielsweise der einen Luftfederbalg tragenden Längslenker 4 angeordnet sind.

Alternativ hierzu können die erhabenen Anlageflächen 12,13 von Ausnehmungen 47,48 umfaßt sein, die an Blattfederorgane 46 halternden Halteelementen 40,41,42 gebildet sind.

Nach einer hier nicht gezeigten Variante können im Minimum entweder nur untere oder nur obere Anlageflächen 12,13 auf dem Vierkantrohrabschnitt 2 vorgesehen sein, welche auf dessen Vorderseite und/oder Hinterseite angeordnet sind. Die Anlageflächen 12,13 können nur zum Teil erhaben ausgebildet und gegebenenfalls mit Stufenabsätzen 24,25,28 versehen sein.

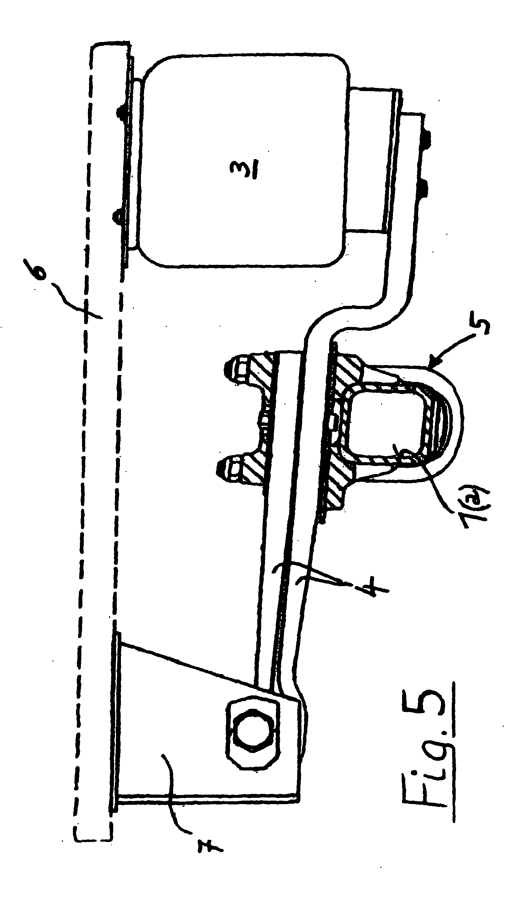

In Fig. 5 ist schematisch und in Seitenansicht eine an einem Fahrzeugrahmen 6 angeordnete luftgefederte Achse gemäß dem Stand der Technik gezeigt. Die luftgefederte Achse besteht aus einem Achskörper 1, dessen Vierkantrohrabschnitt 2 von Befestigungsmitteln 5 umschlossen und auf einem mehrteiligen Längslenker 4 befestigt ist. Der Längslenker 4 ist einendes gelenkig an einer mit dem Fahrzeugrahmen 6 fest verbundenen Konsole 7 angebunden uns trägt andernendes auf seiner Oberseite einen sich unterseitig gegen den Fahrzeugrahmen 6 abstützenden Luftfederbalg 3.

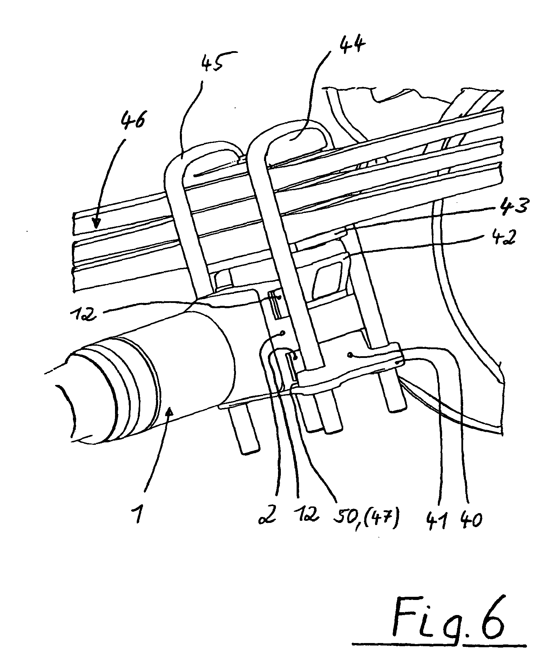

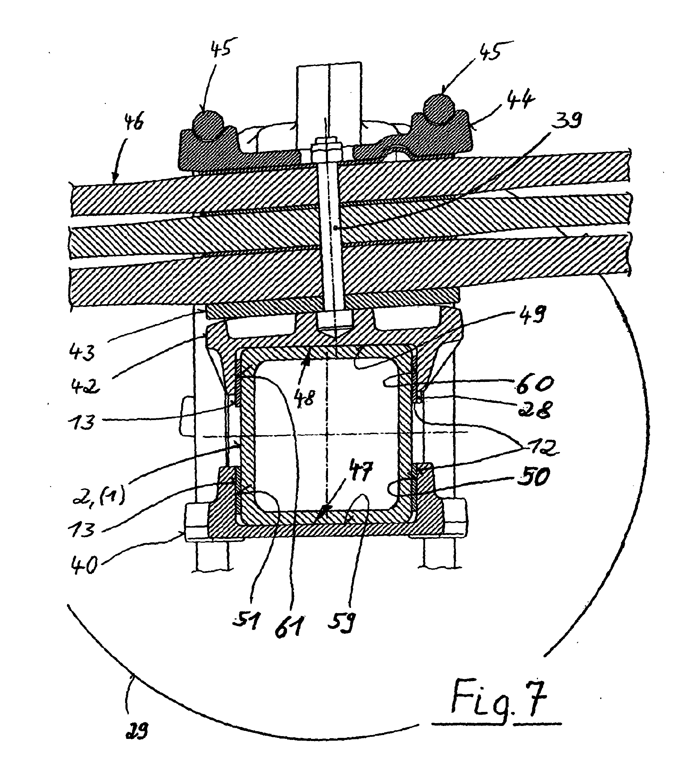

In der Fig. 6 ist ausschnittsweise und in perspektivischer Darstellung von schräg vorne eine dritte Ausführungsart einer Achsanbindung einer mittels eines Blattfederorgans 46 gefederten Fahrzeugachse gezeigt. Der Achskörper 1 der Fahrzeugachse weist einen Vierkantrohrabschnitt 2 auf, dessen erhaben abragende Anlageflächen 12, (13) entsprechend den vorgenannt beschriebenen Ausführungsbeispielen mit solchen, den Anlageflächen 12,13 gegenüberliegenden und an entsprechenden Halteelementen 40,41,42 gebildeten vorderen und hinteren Stirnseiten 50,51;60,61 (Fig. 7) form- und gegebenenfalls kraftschlüssig zur Anlage kommen.

Bei dem in Fig. 6 gezeigten Ausführungsbeispiel ist oberseitig des Vierkantrohrabschnittes 2 des Achskörpers 1 ein oberes Halteelement 42 angeordnet, welches mit einer in Fig. 7 gezeigten, U-förmigen Ausnehmung 48 die zwischen vorderseitiger und hinterseitiger Anlagefläche 12,13 gegebene obere Außenkontur des Vierkantrohrabschnittes 2 form- und kraftschlüssig umgreift. Auf dem oberen Halteelement 42 ist eine Federunterlage 43 aufliegend, auf welcher wiederum das Blattfederorgan 46 angeordnet ist.

Oberhalb des Blattfederorgans 46 liegt eine Federspannplatte 44 auf, die von zwei Federbügeln 45 umschlossen ist. Die Federbügel 45 sind mit ihren freien Enden durch hier nicht näher bezeichnete Bohrungen eines dem Vierkantrohrabschnitt 2 unterlegten unteren Halteelementes 40 beziehungsweise einer unteren Halteplatte 41 hindurchgeführt und mittels hier nicht dargestellter Verschraubungen gegen das Halteelement 40 beziehungsweise die Halteplatte 41 verspannt, wodurch die lösbare Verbindung von Achskörper 1 und Blattfederorgan 46 realisiert ist. Das Halteelement 40 und die Halteplatte 41 können entweder durch zwei separate Bauteile oder durch ein gemeinsames Bauteil gebildet sein.

In Fig. 7 ist ausschnittsweise und in einer Schnittdarstellung in Fahrzeuglängsrichtung der in Fig. 6 gezeigte Vierkantrohrabschnitt 2 des Achskörpers 1 dargestellt. Ein schemahaft angedeutetes Fahrzeugrad ist mit dem Bezugszeichen 29 versehen.

Die durch die vom Vierkantrohrabschnitt 2 erhaben abragenden oberen vorderen und hinteren Anlageflächen 12,13 gegebene obere Anlagekontur des Achskörpers 1 ist oberseitig von der im oberen Halteelement 42 angeordneten, etwa U-förmig ausgestalteten oberen Ausnehmung 48 form- und kraftschlüssig aufgenommen. Die obere Ausnehmung 48 weist zur formschlüssigen Aufnahme der oberen Anlagekontur des Vierkantrohrabschnittes 2 eine horizontale Grundfläche 49 und eine vertikale vordere und hintere Stirnseite 60,61 auf.

Auf dem oberen Halteelement 42 liegt eine Federunterlage 43 auf, auf welcher wiederum das Blattfederorgan 46 und die Federspannpatte 44 angeordnet ist. Die Federspannplatte 44 wird mittels diese umgreifenden Federbügel 45 zusammen mit dem Blattfederorgan 46 und dem Vierkantrohrabschnitt 2 gegen ein dem Vierkantrohrabschnitt 2 unterlegtes, hier einteilig ausgebildetes unteres Halteelement 40 verspannt.

Desweiteren ist das hier gezeigte obere Halteelement 42 zusammen mit der dazwischenliegenden Federunterlage 43 und dem Blattfederorgan 46 gegen die Federpannplatte 44 mittels eines Herzbolzens 39 verbunden.

Analog zur oberen Aufnahmekontur des Vierkantrohrabschnittes 2 ist die untere, durch die erhaben abragenden vorderseitigen und hinterseitigen Anlageflächen 12,13 gegebene Aufnahmekontur des Vierkantrohrabschnittes 2 von einer innerhalb des unteren Halteelementes 40 gegebenen, etwa U-förmigen Ausnehmung 47 form- und kraftschlüssig aufgenommen. Die untere Ausnehmung weist hierbei eine etwa horizontale Grundfläche 59 und an den Anlageflächen 12,13 des Vierkantrohrabschnittes 2 jeweils anliegende vordere und hintere, etwa vertikale Stirnseiten 50,51 auf.

Entsprechend den vorangegangen Ausführungsarten können die gegebenenfalls erhaben ausgeführten Anlageflächen 12,13 des Vierkantrohrabschnittes 2 vertikale Stufenabsätze 28 (Fig. 7) aufweisen, die sich zwecks Querabstützung des Achskörpers 1 an hier nicht gezeigten vertikalen Stufenabsätzen abstützen, welche an den Halteelementen 40,42 gegeben sind.

## Patentansprüche

1. Achsanbindung für blatt- oder luftgefederte Achsen von Fahrzeugen, mit einem zumindest abschnittsweise als Vierkantrohr ausgebildeten Achskörper (1), der im Bereich seines Vierkantrohrabschnittes (2) an seiner Ober- oder Unterseite von hieran mittelbar oder unmittelbar anliegenden Längslenkern (4) oder Blattfederorganen (46) gekreuzt und mit diesen mittels zusätzlicher Befestigungsmittel und gegebenenfalls weiterer Halteelemente lösbar verbunden ist, **dadurch gekennzeichnet, dass** an den Luftfederbälge (3) tragenden Längslenkern (4) jeweils eine quer zur Fahrtrichtung verlaufende, etwa U-förmig gestaltete Ausnehmung (8) vorgesehen ist, an deren gebildeter, horizontal verlaufender Grundfläche (9) jeweils eine Ober- oder Unterseite des Vierkantrohrabschnittes (2) des Achskörpers (1) und an deren beiden vertikal verlaufenden vorderen und hinteren Stirnseiten (10,11) jeweils eine, an der Vorder- und Hinterseite des Vierkantrohrabschnittes (2) des Achskörpers (1) gebildete, quer zur Fahrtrichtung verlaufende vorder- und hinterseitige Anlagefläche (12,13) kraft- und formschlüssig zur abstützenden Anlage kommt, und wobei wenigstens eine der vorder- oder hinterseitigen Anlageflächen (12,13) des Vierkantrohrabschnittes (2) des Achskörpers (1) eine solcherart bearbeitete Oberfläche aufweist, dass die zwischen den vorderen und hinteren Anlageflächen (12,13) gebildete Außenkontur des Vierkantrohrabschnittes (2) formschlüssig mit dem definierten Öffnungsabstand der etwa U-förmigen Ausnehmung (8) des jeweiligen Längslenkers (4) korrespondiert.

2. Achsanbindung für blatt- oder luftgefederte Achsen von Fahrzeugen, mit einem zumindest abschnittsweise als Vierkantrohr ausgebildeten Achskörper (1), der im Bereich seines Vierkantrohrabschnittes (2) an seiner Ober- oder Unterseite von hieran mittelbar oder unmittelbar anliegenden Längslenkern (4) oder Blattfederorganen (46) gekreuzt und mit diesen mittels zusätzlicher Befestigungsmittel und gegebenenfalls weiterer Halteelemente lösbar verbunden ist, **dadurch gekennzeichnet, dass** die Blattfederorgane (46) im wesentlichen über Halteelemente (40,41,42) lösbar mit dem Vierkantrohr des Achskörpers (1) verbunden sind, wobei zumindest die den Blattfederorganen (46) nächstgeordneten Halteelemente (42) eine quer zur Fahrtrichtung verlaufende, etwa U-förmig gestaltete Ausnehmung (47,48) aufweisen, an deren gebildeter, horizontal verlaufender Grundfläche (49,59) jeweils eine Ober- oder Unterseite des Vierkantrohrabschnittes (2) des Achskörpers (1) und an deren beiden vertikal verlaufenden vorderen und hinteren Stirnseiten (60,61 ;50,51) jeweils eine an der Vorder- und Hinterseite des Vierkantrohrabschnittes (2) des Achskörpers (1) gebildete, quer zur Fahrtrichtung verlaufende vorder- und hinterseitige Anlagefläche (12,13) kraft- und formschlüssig zur abstützenden Anlage kommt, und wobei wenigstens eine der vorder- oder hinterseitigen Anlageflächen (12,13) des Vierkantrohrabschnittes (2) des Achskörpers (1) eine solcherart bearbeitete Oberfläche aufweist, dass die zwischen den vorderen und hinteren Anlageflächen (12,13) gebildete Außenkontur des Vierkantrohrabschnittes (2) formschlüssig mit dem definierten Öffnungsabstand der wenigstens einen, etwa U-förmigen Ausnehmung (47,48) des jeweiligen Halteelementes (40,42) korrespondiert.

3. Achsanbindung nach einem der Ansprüche 1 und 2, **dadurch gekennzeichnet, dass** wenigstens eine der vorder- oder hinterseitigen Anlageflächen (12,13) des Vierkantrohrabschnittes (2) des Achskörpers (1) gegenüber dessen Außenkontur zumindest teilweise erhaben ausgebildet ist.

4. Achsanbindung nach einem der Ansprüche 1 bis 3, **dadurch gekennzeichnet, dass** die vorder- und hinterseitigen Anlageflächen (12,13) des Vierkantrohrabschnittes (2) des Achskörpers (1) vorwiegend jeweils im Bereich ihrer mit minimalen Radien oder scharfen Kanten ausgestalteten Ecken an den vorderen und hinteren, vertikalen Stirnseitigen (10,11;60,61;50,51) des Längslenkers (1) beziehungsweise der Halteelemente (40,42) zur form- und kraftschlüssigen Anlage kommen.

5. Achsanbindung nach einem der Ansprüche 1 bis 4, **dadurch gekennzeichnet, dass** die wenigstens eine, zumindest teilweise erhaben ausgeführte Anlagefläche (12,13) des Achskörpers (1) entweder einteilig mit diesem gebildet oder auf diesem als separater Blechstreifen schweißtechnisch angeheftet oder sonstwie gefügt ist, und dass die wenigstens eine Anlagefläche (12,13) nach einem spanabnehmenden Verfahren oder nach einem Kalibrierverfahren solcherart bearbeitet und auf definertes Maß gebracht ist, dass die zwischen den vorderen und hinteren Anlageflächen (12,13) gebildete Außenkontur des Vierkantrohrabschnittes (2) formschlüssig mit dem definierten Öffnungsabstand der etwa U-förmigen Ausnehmung (8) des jeweiligen Längslenkers (4) oder der betreffenden Ausnehmung (47,48) des jeweiligen Halteelementes (40,42) korrespondiert.

6. Achsanbindung nach einem der Ansprüche 1 und 3 bis 5, **dadurch gekennzeichnet, dass** die Längslenker (4) mittels hierfür geeigneter Befestigungsmittel (14) wie beispielsweise Verschraubungselemente oder dergleichen, mittelbar oder unmittelbar mit den Vierkantrohrabschnitten (2) des Achskörpers (1) verbunden sind.

7. Achsanbindung nach einem der Ansprüche 1 und 3 bis 5, **dadurch gekennzeichnet, dass** die Längslenker (4) Vertikalbohrungen (15) zur Aufnahme der Befestigungsmittel (14) aufweisen, welche mit in einer ober- oder unterseitig des Achskörpers (1) angeordneten Halteplatte (16) gegebenen vertikalen Bohrungen (18) korrespondieren.

8. Achsanbindung nach einem der Ansprüche 2 bis 5, **dadurch gekennzeichnet, dass** die Blattfederorgane (46) mittels hierfür geeigneter Befestigungsmittel (44,45) wie beispielsweise Federbügel (45) oder dergleichen im Zusammenwirken mit weiteren Halteelementen (39,40,41,42,43) mittelbar mit den Vierkantrohrabschnitten (2) des Achskörpers (1) verbunden sind.

9. Achsanbindung nach Anspruch 8, **dadurch gekennzeichnet, dass** als weitere Halteelemente (39,40,41,42,43) zumindest eine dem Blattfederorgen (46) unter- oder oberseitig aufliegende Federspannplatte (44) und ein dem Blattfederorgan (46) ober- oder unterseitig unterlegtes Halteelement (42) vorgesehen ist, das den Vierkantrohrabschnitt (2) des Achskörpers (1) bereichsweise mit einer etwa U-förmigen Ausehmung (48) kraft- und formschlüssig umschließt, und daß das Halteelment (42) mit weiteren, auf der gegenüberliegenden Seite des Vierkantrohrabschnittes (2) angeordneten Halteelementen (40,41) den Vierkantrohrabschnitt (2) des Achskörpers (1) im Zusammenwirken mit Federbügeln (45) als weitere Halteelemente einspannt.

10. Achsanbindung nach Anspruch 9, **dadurch gekennzeichnet, dass** die Halteelemente (40,41) entweder als separate Bauteile oder als ein einteiliges Bauteil ausgebildet sind.

11. Achsanbindung nach einem der Ansprüche 1 bis 9, **dadurch gekennzeichnet, dass** die im Bereich des Vierkantrohrabschnittes (2) gegebene Halteplatte (16) oder die gegebenen Halteelemente (40,41) entweder Bestandteil des Achskörpers (1) sind, oder dass die Halteplatte (16) oder die Halteelemente (40,41) ober- oder unterseitig des Vierkantrohrabschnittes (2) als separates Bauteil angeordnet sind.

12. Achsanbindung nach Anspruch 1 bis 11, **dadurch gekennzeichnet, dass** die als separates Bauteil vorgesehene Halteplatte (16) oder die Halteelemente (40,41) und/oder das Halteelement (42) den Vierkantrohrabschnitt (2) mit einer hierzu komplementär ausgebildeten und quer zur Fahrtrichtung verlaufenden U-förmigen Ausnehmung (17;47,48) form- und kraftschlüssig umgreifen, und dass
- die U-förmige Ausnehmung (17;47,48) der Halteplatte (16) oder der Halteelemente (40,41;42) eine horizontal verlaufende Grundfläche (19, 59; 49) aufweisen, an welcher jeweils eine Ober- oder Unterseite des Vierkantrohrabschnittes (2) des Achskörpers (1) zur Anlage kommt, und dass
- an den beiden vertikal verlaufenden vorderen und hinteren Stirnseiten (20,21;50,51;60,61) der U-förmigen Ausnehmung (17;47,48) der Halteplatte (16) oder der Halteelemente (40,41 ;42) jeweils eine an der Vorder- und Hinterseite des Vierkantrohrabschnittes (2) des Achskörpers (1) gebildete, quer zur Fahrtrichtung verlaufende vorder- und hinterseitige Anlagefläche (12,13) kraft- und formschlüssig zur abstützenden Anlage kommt, und dass
- wenigstens eine der vorder- oder hinterseitigen Anlageflächen (12,13) des Vertikantrohrabschnittes (2) der Achskörpers (1) gegebenenfalls teilweise erhaben ausgebildet und eine solcherart bearbeitete Oberfläche aufweist, dass die zwischen den vorderen und hinteren Anlageflächen (12,13) gebildete Außenkontur des Vierkantrohrabschnittes (2) formschlüssig mit dem definierten Öffnungsabstand der etwa U-förmigen Ausnehmung (17;47;48) der Halteplatte (16) oder der Halteelemente (40,41;42) korrespondiert, und dass
- die vorder- und hinterseitigen Anlageflächen (12,13) des Vierkantrohrabschnittes (2) des Achskörpers (1) vorwiegend jeweils im Bereich ihrer mit minimalen Radien oder scharfen Kanten ausgestalteten Ecken an den vorderen und hinteren, vertikalen Stirnseiten (20,21;50,51;60,61) der Halteplatte (16) oder der Halteelemente (40,41;42) zur form- und kraftschlüssigen Anlage kommen.

13. Achsanbindung nach einem oder mehreren der vorangegangenen Ansprüche 1 bis 12, **dadurch gekennzeichnet, dass** die Längslenker (4) oder die Halteelemente (40,41;42) zusätzlich zur quer verlaufenden U-förmigen Ausnehmung (8;47;48) eine diese kreuzende, etwa in Fahrtrichtung verlaufende U-förmige Längsausnehmung (22) aufweisen, deren vertikale Stirnseiten (23) mit auf den erhabenen Anlageflächen (12,13) des Vierkantrohrabschnittes (2) des Achskörpers (1) gegebenen vertikalen Stufenabsätzen (24) quer zur Fahrtrichtung zur seitenabstützenden Anlage kommen.

14. Achsanbindung nach einem oder mehreren der vorangegangenen Ansprüche 1 bis 13, **dadurch gekennzeichnet, dass** stirnseitig der quer zur Fahrtrichtung verlaufenden U-förmigen Ausnehmung (8;47;48) der Längslenker (4) oder der Halteelemente (40,41;42) jeweils vertikale, längs zur Fahrtrichtung verlaufende Anlageflächen (27) gegeben sind, die sich an innerhalb der erhabenen Anlageflächen (12,13) des Vierkantrohrabschnittes (2) des Achskörpers (1) eingerückt gegebenen vertikalen Stufenabsätzen (28) quer zur Fahrtrichtung abstützen.

15. Achsanbindung nach einem oder mehreren der vorangegangenen Ansprüche 1 bis 14, **dadurch gekennzeichnet, dass** die einteilig mit dem Achskörper (1) gebildete oder die als separates Bauteil vorgesehene Halteplatte (16) wenigstens einen in Fahrtrichtung verlaufenden U-förmigen Längsausnehmungsabschnitt aufweist, dessen vertikale Stirnseiten mit auf den erhabenen Anlageflächen (12,13) des Vierkantrohrabschnittes (2) des Achskörpers (1) gegebenen vertikalen Stufenabsätzen (24,28) quer zur Fahrtrichtung zur seitenabstützenden Anlage kommen.

16. Achsanbindung nach einem oder mehreren der vorangegangenen Ansprüche 1 bis 15, **dadurch gekennzeichnet, dass** als Fahrzeug ein Nutzfahrzeug, ein Sattelzug oder ein Anhänger vorgesehen ist.

## Claims

1. Axle attachment for leaf- or air-sprung axles for vehicles, with an axle housing (1) which is at least in part designed as a square tube (2) whose upper side or underside is crossed by longitudinal arms (4) or leaf-spring organs (46) which are in direct or indirect contact with the upper side or underside of said square tube section (2) and detachably connected with it by means of additional fasteners and, if necessary, further holding elements, **characterised in that** an approximately U-shaped recess (8) extending in transverse direction relative to the driving direction is provided on each longitudinal arm (4) carrying air bellows (3), whereby an upper side or underside of the square tube section (2) of the axle housing (1) is positively supported on the base face (9) provided on each recess (8) and extending in horizontal direction and a front and rear contact face (12, 13) provided on the front and rear sides of the square tube section (2) of the axle housing (1) and extending in transverse direction relative to the driving direction is each positively supported on the two vertically extending front and rear end faces (10,11) of said recess (8), and whereby at least one of the front or rear contact faces (12, 13) on the square tube section (2) of the axle housing (1) shows a surface which is machined such that the outer contour, formed between the front and rear contact faces (12, 13) of the square tube section (2) positively corresponds to the defined orifice distance of the approximately U-shaped recess (8) of the respective longitudinal arm (4).

2. Axle attachment for leaf- or air-sprung axles for vehicles, with an axle housing (1) which is at least in part designed as a square tube (2) whose upper side or underside is crossed by longitudinal members (4) or leaf-spring organs (46) which are in direct or indirect contact with the upper side or underside of said square tube section (2) and detachably connected with it by means of additional fasteners and, if necessary, further holding elements, **characterised in that** the leaf-spring organs (46) are detachably connected with the square tube of the axle housing (1) mainly via holding elements (40,41, 42), whereby at least the holding elements (42) nearest to the leaf-spring organs (46) feature an approximately U-shaped recess (47,48) extending in transverse direction relative to the driving direction, whereby an upper side or underside of the square tube section (2) of the axle housing (1) is positively supported on each base face (49, 59) provided on each recess (47, 48) and extending in horizontal direction and a front and rear contact face (12, 13) provided on the front and rear sides of the square tube section (2) of the axle housing (1) and extending in transverse direction relative to the driving direction is positively supported on each of the two vertical front and rear end faces (60, 61; 50, 51) and whereby at least one of the front and rear contact faces (12, 13) on the square tube section (2) of the axle housing (1) shows a surface which is machined such that the outer contour, formed between the front and rear contact faces (12, 13), of the square tube section (2) positively corresponds to the defined orifice distance of the at least one, approximately U-shaped recess (47, 48) of the respective holding element (40, 42).

3. Axle attachment according to one of the Claims 1 and 2, **characterised in that** at least one of the front or rear contact faces (12, 13) on the square tube section (2) of the axle housing (1) is at least partially raised compared to the outer contour of said axle housing (1).

4. Axle attachment according to one of the Claims 1 to 3, **characterised in that** mainly the corner areas with their minimum radii or sharp edges of each front and rear contact face (12, 13) on the square tube section (2) of the axle housing (1) are positively supported on the front and rear vertical end faces (10, 11; 60, 61; 50, 51) on the longitudinal arm (1) and/or on the holding elements (40, 42).

5. Axle attachment according to one of the Claims 1 to 4, **characterised in that** the at least one, at least partially raised contact face (12, 13) on the axle housing (1) is designed either as a single piece with said axle housing (1) or as a separate sheet-metal strip attached to said axle housing (1) by welding or joined to it in another way and that the at least one contact face (12, 13) is machined to such a defined size after a cutting or calibrating process that the outer contour, formed between the front and rear contact faces (12, 13), of the square tube section (2) positively corresponds to the defined orifice distance of the approximately U-shaped recess (8) of the respective longitudinal arm (4) or of the respective recess (47, 48) on the respective holding element (40, 42).

6. Axle attachment according to one of the claims 1 and 3 to 5, **characterised in that** the longitudinal arms (4) are directly or indirectly connected with the square tube sections (2) of the axle housing (1) by means of suitable fasteners (14) such as bolted connection elements or similar devices.

7. Axle attachment according to one of the claims 1 and 3 to 5, **characterised in that** the longitudinal arms (4) have vertical bores (15) for the insertion of fasteners (14) which correspond to vertical bores (18) provided in a holding plate (16) arranged on the upper side or underside of the axle housing (1).

8. Axle attachment according to one of the Claims 2 to 5, **characterised in that** the leaf-spring organs (46) are indirectly connected with the square tube sections (2) of the axle housing (1) by means of suitable fasteners (44, 45) such as spring U-bolts (45) or similar devices interacting with further holding elements (39, 40, 41, 42, 43).

9. Axle attachment according to Claim 8, **characterised in that** at least one spring tension plate (44) placed against the upper side or underside of the leaf spring organ (46) and a holding element (42) placed underneath the upper side or underside of the leaf spring organ (46) and positively encompassing part of the square tube section (2) of the axle housing (1) with an approximately U-shaped recess (48) are provided as further holding elements (39, 40, 41, 42), 43) and that the holding element (42) clamps the square tube section (2) of the axle housing (1) into place with further holding elements (40, 41) arranged on the opposite side of the square tube section (2) and interacting with spring U-bolts (45) as further holding elements.

10. Axle attachment according to Claim 9, **characterised in that** the holding elements (40, 41) are designed either as separate parts or as a single-piece part.

11. Axle attachment according to one of the Claims 1 to 9, **characterised in that** the holding plate (16) or holding elements (40, 41) provided in the area of the square tube section (2) are either part of the axle housing (1) or that the holding plate (16) or the holding elements (4), 41) are arranged on the upper side or underside of the square tube section (2) as a separate part.

12. Axle attachment according to one of the Claims 1 to 11, **characterised in that** the holding plate (16) provided as a separate part or the holding elements (40, 41) and/or the holding element (42) positively encompass the square tube section (2) with a U-shaped recess (17; 47, 48) designed complementary to said square tube section (2) and extending in transverse direction relative to the driving direction and that
• the U-shaped recess (17; 47,48) of the holding plate (16) or of the holding elements (40, 41; 42) features a horizontal base face (19, 59; 49) placed against each upper side or underside of the square tube section (2) of the axle housing (1), and that
• a front and rear contact face (12, 13) provided on the front and rear sides of the square tube section (2) of the axle housing (1) and extending in transverse direction relative to the driving direction is each positively supported on the two vertical front and rear end faces (20, 21; 50, 51); 60, 61) of the U-shaped recess (17; 47, 48) of the holding plate (16) or of the holding elements (40, 41; 42) and that
• at least one of the front or rear contact faces (12, 13) of the vertical tube section (23) of the axle housing (1) is, if appropriate, partially raised and has a surface machined such that the outer contour formed between the front and rear contact faces (12, 13) of the square tube section (2) positively corresponds to the defined orifice distance of the approximately U-shaped recess (17; 47; 48) of the holding plate (16) or of the holding elements (40, 41; 42), and that
• mainly the corner areas with their minimum radii or sharp edges of each front and rear contact face (12, 13) of the square tube section (2) of the axle housing (1) are positively supported on the front and rear vertical end faces (20; 21; 50, 51; 60,61) of the holding plate (16) or of the holding elements (40, 41; 42).

13. Axle attachment according to one or several of the foregoing Claims 1 to 12, **characterised in that**, in addition to the U-shaped recess (8; 47;46) extending in transverse direction, the longitudinal arms (4) or the holding elements (40, 41; 42) feature a longitudinal recess (22) which crosses said recess (8; 47; 48) and extends approximately in driving direction and whose vertical end faces (23) are brought into contact for lateral support in transverse direction relative to the driving direction with the vertical stepped faces (24) provided on the raised contact faces (12, 13) of the square tube section (2) of the axle housing (1).

14. Axle attachment according to one or several of the foregoing Claims 1 to 13, **characterised in that** vertical contact faces (27) extending in driving direction are provided on the end faces of the U-shaped recess (8; 47; 48) provided on the longitudinal arms (4) or on the holding elements (40, 41; 42), extending in transverse direction relative to the driving direction and supported on the vertical stepped faces (28) arranged within the raised contact faces (12, 13) on the square tube section (2) of the axle housing (1) in an offset manner.

15. Axle attachment according to one or several of the foregoing Claims 1 to 14, **characterised in that** the holding plate (16) provided as a single part with the axle housing (1) or as a separate part has at least one U-shaped longitudinal recess section which extends in driving direction, the vertical end faces fwhich recess section are brought into contact for lateral support in transverse direction relative to the driving direction with vertical stepped faces (24, 28) provided on the raised contact faces (12, 13) on the square tube section (2) of the axle housing (1).

16. Axle attachment according to one or several of the foregoing Claims 1 to 15, **characterised in that** the vehicle is a commercial vehicle, a semitrailer tractor or a trailer.

## Revendications

1. Liaison d'essieu pour des essieux à ressorts à lames ou à suspension pneumatique de véhicules, comprenant au moins un corps d'essieu (1) formé au moins par sections en tant que tube carré, qui, dans la partie de sa section en tube carré (2), est croisé sur son côté supérieur ou son côté inférieur par des bras longitudinaux (4) ou des organes de ressorts à lames (46), indirectement ou directement adjacents à ces côtés, et est raccordé de manière amovible à ceux-ci à l'aide de moyens de fixation supplémentaires et, le cas échéant, d'autres éléments de fixation, **caractérisée en ce qu'**est prévu à chaque fois, sur les bras longitudinaux (4) portant des soufflets pneumatiques (3), un évidement (8) exécuté à peu près en forme de U et s'étendant transversalement par rapport au sens de la marche, sur la surface de base (9) formée, s'étendant horizontalement duquel un côté supérieur ou un côté inférieur de la section de tube carré (2) du corps d'essieu (1) vient à chaque fois s'appliquer par adhérence de force et par adhérence positive en tant que support, et sur les deux faces frontales (10, 11) avant et arrière, s'étendant verticalement, duquel une surface d'application (12, 13), présente côté avant et côté arrière, formée sur le côté avant et sur le côté arrière de la section de tube carré (2) du corps d'essieu (1) et s'étendant transversalement par rapport au sens de la marche, vient à chaque fois s'appliquer par adhérence de force et par adhérence positive en tant que support, et au moins une des surfaces d'application (12, 13), présentes côté avant ou côté arrière de la section de tube carré (2) du corps d'essieu (1) présentant une surface traitée de telle manière que le contour extérieur, formé entre les surfaces d'application (12, 13) avant et arrière de la section de tube carré (2) correspond, par adhérence de forme, à l'écart d'ouverture défini de l'évidement (8) à peu près en forme de U du bras longitudinal (4) respectif.

2. Liaison d'essieu pour des essieux à ressorts à lames ou à suspension pneumatique de véhicules, comprenant au moins un corps d'essieu (1) formé au moins par sections en tant que tube carré, qui, dans la partie de sa section en tube carré (2), est croisé sur son côté supérieur ou son côté inférieur par des bras longitudinaux (4) ou des organes de ressorts à lames (46) indirectement ou directement adjacents à ces côtés, et est raccordé de manière amovible à ceux-ci à l'aide de moyens de fixation supplémentaires et, le cas échéant, d'autres éléments de fixation, **caractérisée en ce que** les organes de ressorts à lames (46) sont raccordés au tube carré du corps d'essieu (1) de manière amovible, essentiellement par l'intermédiaire d'éléments de fixation (40, 41, 42), au moins les éléments de fixation (42) disposés le plus près des organes de ressorts à lames (46) présentant un évidement (47, 48) à peu près en forme de U, s'étendant transversalement par rapport au sens de la marche, sur la surface de base (49, 59) formée, s'étendant horizontalement duquel un côté supérieur ou un côté inférieur de la section de tube carré (2) du corps d'essieu (1) vient à chaque fois s'appliquer par adhérence de force et par adhérence positive en tant que support, et sur les deux faces frontales avant et arrière (60, 61 ; 50, 51), s'étendant verticalement, duquel une surface d'application (12, 13), formée respectivement sur le côté avant et sur le côté arrière de la section de tube carré (2) du corps d'essieu (1), s'étendant transversalement par rapport au sens de la marche, vient s'appliquer par adhérence de force et par adhérence positive en tant que support, et au moins une des surfaces d'application (12, 13), présentes côté avant ou côté arrière, de la section de tube carré (2) du corps d'essieu (1) présentant une surface traitée de telle manière que le contour extérieur, formé entre les surfaces d'application (12, 13) avant et arrière, de la section de tube carré (2) correspond, par adhérence de forme, à l'écart d'ouverture défini d'au moins un évidement (47, 48) à peu près en forme de U de l'élément de fixation respectif (40, 42).

3. Liaison d'essieu selon l'une quelconque des revendications 1 et 2, **caractérisée en ce qu'**au moins une des surfaces d'application (12, 13), présentes côté avant ou côté arrière, de la section de tube carré (2) du corps d'essieu (1) est exécutée, au moins en partie, de manière convexe par rapport au contour extérieur du corps d'essieu.

4. Liaison d'essieu selon l'une quelconque des revendications 1 à 3, **caractérisée en ce que** les surfaces d'application (12, 13), présentes côté avant ou côté arrière, de la section de tube carré (2) du corps d'essieu (1) viennent s'appliquer, par adhérence de forme et par adhérence positive, sur les faces frontales (10, 11 ; 60, 61 ; 50, 51) verticales, avant et arrière, du bras longitudinal (4) ou des éléments de fixation (40, 42), principalement à chaque fois au niveau de leurs coins exécutés avec des rayons minimaux ou des bords tranchants.

5. Liaison d'essieu selon l'une quelconque des revendications 1 à 4, **caractérisée en ce qu'**au moins une surface d'application (12, 13), exécutée au moins en partie de manière convexe, du corps d'essieu (1) est soit formée d'une seule pièce avec celui-ci, soit attachée, par technique de soudure, sur celui-ci en tant que bande de tôle séparée, soit assemblée de manière quelconque, et **en ce qu'**au moins une surface d'application (12, 13) est traitée selon un procédé d'enlèvement de copeaux ou selon un procédé de calibrage et est mise à des dimensions définies de telle manière que le contour extérieur, formé entre les surfaces d'application avant et arrière (12, 13) de la section de tube carré (2), corresponde par adhérence de forme à l'écart d'ouverture défini de l'évidement (8) à peu près en forme de U du bras longitudinal respectif (4) ou de l'évidement concerné (47, 48) de l'élément de fixation respectif (40, 42).

6. Liaison d'essieu selon l'une quelconque des revendications 1 et 3 à 5, **caractérisée en ce que** les bras longitudinaux (4) sont raccordés, indirectement ou directement, aux sections de tube carré (2) du corps d'essieu (1) à l'aide de moyens de fixation (14) appropriés à cet effet, comme par exemple des éléments de vissage ou similaires.

7. Liaison d'essieu selon l'une quelconque des revendications 1 et 3 à 5, **caractérisée en ce que** les bras longitudinaux (4) présentent des alésages verticaux (15) destinés à loger les moyens de fixation (14), lesquels correspondent, dans une plaque de maintien (16) disposée du côté supérieur ou du côté inférieur du corps d'essieu (1), à des alésages verticaux définis (18).

8. Liaison d'essieu selon l'une quelconque des revendications 2 à 5, **caractérisée en ce que** les organes de ressorts à lames (46) sont raccordés, de manière concourante avec des éléments de fixation supplémentaires (39, 40, 41, 42, 43), indirectement aux sections de tube carré (2) du corps d'essieu (1) à l'aide de moyens de fixation (44, 45) appropriés à cet effet comme, par exemple, des étriers de ressort (45) ou similaires.

9. Liaison d'essieu selon la revendication 8, **caractérisée en ce qu'**au moins une plaque de serrage de ressort (44), reposant du côté inférieur ou du côté supérieur de l'organe de ressorts à lames (46), et un élément de fixation (42), posé du côté supérieur ou du côté inférieur de l'organe de ressorts à lames (46), sont prévus en tant qu'éléments de fixation supplémentaires (39, 40, 41, 42, 43), cet élément de fixation entourant, par sections, la section de tube carré (2) du corps d'essieu (1), par adhérence de force et par adhérence positive, avec un évidement (48) à peu près en forme de U, et **en ce que** l'élément de fixation (42), avec d'autres éléments de fixation (40, 41) disposés du côté opposé de la section de tube carré (2), serre la section de tube carré (2) du corps d'essieu (1) de manière concourante avec des étriers de ressort (45) en tant qu'éléments de fixation supplémentaires.

10. Liaison d'essieu selon la revendication 9, **caractérisée en ce que** les éléments de fixation (40, 41) sont exécutés soit en tant que composants séparés, soit en tant qu'un composant d'une seule pièce.

11. Liaison d'essieu selon l'une quelconque des revendications 1 à 9, **caractérisée en ce que** la plaque de maintien (16) ou les éléments de fixation (40, 41) présents dans la partie de la section de tube carré (2) font partie du corps d'essieu (1) ou **en ce que** la plaque de maintien (16) ou les éléments de fixation (40, 41) sont disposés du côté supérieur ou du côté inférieur de la section de tube carré (2) en tant que composant séparé.

12. Liaison d'essieu selon l'une quelconque des revendications 1 à 11, **caractérisée en ce que** la plaque de maintien (16) ou les éléments de fixation (40, 41) prévus en tant que composant séparé et/ou l'élément de fixation (42) entourent la section de tube carré (2), par adhérence de forme et par adhérence positive, avec un évidement (17, 47, 48) en forme de U, exécuté de manière complémentaire à la section de tube carré et s'étendant transversalement par rapport au sens de la marche, et **en ce que**
- l'évidement en forme de U (17 ; 47 ; 48) de la plaque de maintien (16) ou des éléments de fixation (40, 41 ; 42) présentent une surface de base (19, 59 ; 49) s'étendant horizontalement, sur laquelle vient à chaque fois s'appliquer une face supérieure ou une face inférieure de la section de tube carré (2) du corps d'essieu (1), et **en ce que**
- une surface d'application (12, 13) respective, présente du côté avant et du côté arrière, formée sur le côté avant et sur le côté arrière de la section de tube carré (2) du corps d'essieu (1) et s'étendant transversalement par rapport au sens de la marche, vient s'appliquer, par adhérence de force et par adhérence positive, en tant que support, sur les deux faces frontales (20, 21 ; 50, 51 ; 60, 61) avant et arrière de l'évidement en forme de U (17, 47, 48) de la plaque de maintien (16) ou des éléments de fixation (40, 41 ; 42), et **en ce que**
- au moins une des surfaces d'application (12, 13), présentes du côté avant ou du côté arrière, de la section de tube carré (2) du corps d'essieu (1) est, le cas échéant, exécutée en partie de manière convexe et présente une surface traitée de telle manière que le contour extérieur, formé entre les surfaces d'application (12, 13) avant et arrière, de la section de tube carré (2) corresponde, par adhérence de forme, à l'écart d'ouverture défini de l'évidement (17 ; 47 ; 48) à peu près en forme de U de la plaque de maintien (16) ou des éléments de fixation (40, 41 ; 42), et **en ce que**
- les surfaces d'application (12, 13), présentes du côté avant ou du côté arrière, de la section de tube carré (2) du corps d'essieu (1) viennent s'appliquer, par adhérence de forme et par adhérence positive, sur les faces frontales (20, 21 ; 50, 51 ; 60, 61) verticales, avant et arrière, de la plaque de maintien (16) ou des éléments de fixation (40, 41 ; 42), principalement respectivement au niveau de leurs coins exécutés avec des rayons minimaux ou des bords tranchants.

13. Liaison d'essieu selon une ou plusieurs des revendications précédentes 1 à 12, **caractérisée en ce que** les bras longitudinaux (4) ou les éléments de fixation (40, 41 ; 42), en plus de l'évidement (8, 47 ; 48) en forme de U, s'étendant transversalement, présentent un évidement longitudinal (22) croisant celui-ci et s'étendant à peu près dans le sens de la marche, dont les faces frontales verticales (23) viennent en application, transversalement au sens de la marche pour le support latéral, avec des gradins (24) verticaux présents sur les surfaces d'application convexes (12, 13) de la section de tube carré (2) du corps d'essieu (1).

14. Liaison d'essieu selon une ou plusieurs des revendications précédentes 1 à 13, **caractérisée en ce que**, du côté frontal de l'évidement en forme de U (8 ; 47 ; 48), s'étendant transversalement par rapport au sens de la marche, des bras longitudinaux (4) ou des éléments de fixation (49, 41 ; 42), des surfaces d'application (27) s'étendant longitudinalement par rapport au sens de la marche sont présentes et s'appuient sur des gradins (28) verticaux présents en retrait à l'intérieur des surfaces d'application convexes (12, 13) de la section de tube carré (2) du corps d'essieu (1).

15. Liaison d'essieu selon une ou plusieurs des revendications précédentes 1 à 14, **caractérisée en ce que** la plaque de maintien (16), formée d'une seule pièce avec le corps d'essieu (1) ou prévue en tant que composant séparé, présente au moins une section d'évidement longitudinal en forme de U s'étendant dans le sens de la marche, dont les faces frontales verticales viennent s'appliquer, pour le support latéral, sur des gradins (24, 28) verticaux présents sur les surfaces d'application convexes (12, 13) de la section de tube carré (2) du corps d'essieu (1).

16. Liaison d'essieu selon une ou plusieurs des revendications précédentes 1 à 15, **caractérisée en ce qu'**un véhicule industriel, un tracteur articulé ou une remorque est prévu(e) en tant que véhicule.
